# EUROPÄISCHE PATENTSCHRIFT

(11) **EP 3 187 472 B1**
(45) Veröffentlichungstag und Bekanntmachung des Hinweises auf die Patenterteilung: **26.09.2018**
(21) Anmeldenummer: 17156178.0
(22) Anmeldetag: 16.10.2015
(51) Int. Cl.: C03C 3/17, H01M 2/06, H01G 9/10, H01G 11/80, H01G 11/82, C03C 3/19, H01G 2/10, H01M 2/30, H01M 2/08, H01M 2/04

(54) **BAUTEIL MIT BAUTEILVERSTÄRKUNG UND DURCHFÜHRUNG**
COMPONENT WITH COMPONENT REINFORCEMENT AND IMPLEMENTATION
COMPOSANT PRÉSENTANT UN RENFORT ET RÉALISATION

(30) Priorität: 11.11.2014 DE 102014016601
(43) Veröffentlichungstag der Anmeldung: 05.07.2017
(62) Teilanmeldung aus: 15190091.7
(73) Patentinhaber: Schott AG, 55122 Mainz (DE)
(72) Erfinder: HARTL, Helmut, 1210 Wien (AT)
(74) Vertreter: Sawodny, Michael-Wolfgang

(56) Entgegenhaltungen:
- WO-A1-2012/110246
- CN-A- 101 286 551
- DE-A1-102011 103 976
- US-A1- 2006 035 147

## Beschreibung

Die Erfindung betrifft ein Bauteil mit einer Bauteildicke und wenigstens einer Durchführungsöffnung sowie ein Gehäuse, insbesondere für eine elektrische Speichereinrichtung, insbesondere eine Batterie oder einen Kondensator mit einem erfindungsgemäßen Bauteil und eine Speichereinrichtung mit einem derartigen Gehäuse.

Bei dem Einbringen von Leitern, insbesondere von Metallstiften, in einen Grundkörper, der aus Leichtmetallen wie beispielsweise Aluminium bestehen, werden hermetisch dichte Durchführungen benötigt, wenn derartige Bauteile, beispielsweise Teil eines Gehäuses einer Speichereinrichtung, beispielsweise von Batterien und/oder Kondensatoren sind. Die Batterien können traditionelle Energiequellen wie beispielsweise Blei-Säure-Batterien, Nickel-Cadmium-Batterien oder Nickel-Metall-Batterien sein. Als Batterien im Sinne der Erfindung wird sowohl eine Einwegbatterie, die nach ihrer Entladung entsorgt und/oder recycelt wird, als auch ein Akkumulator verstanden.

Lithium-Ionen-Batterien sind seit vielen Jahren bekannt. Diesbezüglich wird beispielsweise auf "Handbook of Batteries, David Linden, Herausgeber, 2. Auflage, McGrawHill 1995, Kapitel 36 und 39" verwiesen.

Insbesondere für Anwendung von Batterien und/oder Kondensatoren in der Automobilumgebung müssen eine Vielzahl von Problemen wie Korrosionsbeständigkeit, Beständigkeit bei Unfall oder Schwingungsfestigkeit gelöst werden. Des Weiteren ist sicherzustellen, dass die Batterie hermetisch dicht über einen langen Zeitraum ausgelegt ist. Die Dichtheit beeinträchtigen können z. B. Undichtigkeiten im Bereich der Elektrode der Batterie bzw. der Elektrodendurchführung der Batterie, ein Batteriekurzschluss oder Temperaturänderungen, die zu einer verminderten Batterielebensdauer führen. Insbesondere soll auch das Eindringen von Feuchtigkeit in die Batteriezelle vermieden werden.

Um eine bessere Beständigkeit bei Unfall sicherzustellen, schlägt die DE 101 05 5877 A1 ein Gehäuse für eine Lithium-Ionen-Batterie vor, wobei das Gehäuse einen Metallmantel umfasst, der auf beiden Seiten offen ist und verschlossen wird. Der Stromanschluss ist durch einen Kunststoff isoliert. Nachteilig an der Kunststoffisolierung ist die limitierte Temperaturbeständigkeit und die unsichere Dichtheit über die Lebensdauer.

Durchführungen für Speichereinrichtungen wie beispielsweise Batterien, die in ein Leichtmetall eingebracht werden, sind in einer Vielzahl von Dokumenten beschrieben. So beispielsweise in der WO 2012/110242 A1, der WO 2012/110246 A1, der WO 2012/110247 A1, der WO 2012/110245 A1 und insbesondere der WO 2012/1102444 A1 oder der CN 101286551 A.

Die DE 10 2011 103 976 A1 zeigt ebenfalls eine Durchführung insbesondere durch ein Gehäusebauteil, wobei Dicken für den Grundkörper angegeben sind ohne aber ein Verhältnis der Glasmaterialaußenabmessungen zu einer Verstärkungsmaterialaußenabmessung anzugeben.

Die DE 44 13 808 B4 zeigt eine elektrochemische Zelle sowie die Herstellung solcher Zellen. Die elektrochemische Zelle umfasst ein aktives Anoden- und ein aktives Kathodenmaterial sowie einen Halterahmen. Bemessungen der als Knopfzelle ausgebildeten elektrochemischen Zelle sind nicht angegeben.

Nachteilig an den Durchführungen, wie beispielsweise in der WO 2012/110244 A1 beschrieben, war, dass der Grundkörper in der Regel eine Dicke aufwies, die der Einglasungslänge entsprach. Hierdurch hatten die Gehäusebauteile relativ hohes Gewicht und zu geringen Innenbauraum, so dass Volumen bei einer Batteriezelle verloren gingen.

Wollte man Gehäusebauteile herstellen, so war es notwendig, eine Verdickung zerspanend aus dem Vollmaterial herzustellen. Ein weiteres Problem bestand darin, dass hermetische Dichtheit wegen nicht ausreichender Vorspannung nicht erzielt wurde Erfindungsgemäß wird das Problem, ein möglichst dünnes und leichtes Bauteil zur Verfügung zu stellen, in Kombination mit der geforderten hermetischen Dichtheit durch ein Bauteil gemäß Anspruch 1 gelöst.

Unter hermetischer Dichtheit wird verstanden, dass bei einem Druckunterschied von 1 bar die Helium-Leckrate < 1 · 10⁻⁸ mbar ls⁻¹, bevorzugt < 1 · 10⁻⁸ mbar ls⁻¹ ist.

Die hermetische Dichtheit stellt sicher, dass die Lebensdauer einer elektrischen Speichereinrichtung, insbesondere einer Batterie, erheblich erweitert wird. Die hermetische Dichtheit wird auch gewährleistet, wenn der durch das Glas- oder Glaskeramikmaterial hindurchgeführte stiftförmige Leiter sich aufgrund hoher Ströme und/oder bei Kurzschluss kurzzeitig stark erwärmt. Insbesondere wird auch die hermetische Dichtheit auch verhindert, dass Feuchtigkeit in die Batteriezelle eindringen kann.

Das erfindungsgemäße Bauteil mit einer Bauteildicke (BD) und wenigstens einer Durchführungsöffnung, durch die ein Leiter, insbesondere ein im Wesentlichen stiftförmiger Leiter in einem Glas- oder Glaskeramikmaterial mit einer Glasmaterial-Außenabmessung (GA) und einer Einglaslänge (EL) hindurchgeführt wird, weist im Bereich der Durchführungsöffnung eine Verstärkung mit einer Bauteildurchgangsöffnungsdicke (BDD) auf, wobei die Bauteildurchgangsöffnungsdicke (BDD) größer als die Bauteildicke (BD) ist. Die Verstärkung weist eine Verstärkungsmaterialaußenabmessung (VA) auf. Erfindungsgemäß wurde herausgefunden, dass, um die oben genannten Bedingungen zu erfüllen, das Verhältnis der Glasmaterialaußenabmessung (GA) zur Verstärkungsmaterialaußenabmessung (VA) größer gleich 1 zu 1,2 ist, was bedeutet, dass die Verstärkungsmaterialaußenabmessung mindestens das 1,2-fache der Glasmaterialaußenabmessungen ist, wobei das Verstärkungsmaterial eine Breite aufweist und das Glas- oder Glaskeramikmaterial ein kreisförmiger oder runder Pfropfen mit einem Durchmesser ist und die Breite des Verstärkungsmaterials das mindestens 1,2-fache des Durchmessers des Glas- oder Glaskeramikmaterials ist.

Konkret bedeutet diese Bedingung, dass bei einem zylinderförmigen Glasmaterial und bei einem kreisförmigen Verstärkungsring das Verhältnis des Außendurchmessers des zylinderförmigen

Verstärkungsrings größer gleich 1 zu 1,2 ist, insbesondere im Bereich 1 zu 1,2 bis 1 zu 2,2 liegt.

Durch die Wahl des Verhältnisses GA/VA wird überraschenderweise erreicht wird, dass ein ausreichender Druck auf das Glasmaterial im Bereich der Durchgangsöffnung aufgebracht werden kann, so dass eine hermetische Dichtheit zur Verfügung gestellt wird. Desweiteren wird durch die Breite der Verstärkung in Ihren materiellen Außenabmessungen die für eine hermetische Dichtheit notwendige Kompression auf das Glas aufgebracht, was ebenfalls die hermetische Dichtheit unterstützt.

Der Vorteil der erfindungsgemäßen Ausgestaltung liegt darin, dass ein sehr dünnes und daher gewichtssparendes Material für das Bauteil eingesetzt werden kann. Dies ist insbesondere dann von Vorteil, wenn das Bauteil als Teil eines Gehäuses, z. B. eines Gehäuses einer Speichereinrichtung, z. B. eines Batteriegehäuses, insbesondere eines Batteriedeckels oder eines Kondensators, insbesondere Kondensatordeckels eingesetzt wird.

Durch die erfindungsgemäße Ausgestaltung mittels eines Verstärkungsrings, der deutlich größer in den Außenabmessungen ist als das im Wesentlichen zylinderförmige Glasmaterial, wird überraschenderweise erreicht, dass ein ausreichender Druck auf das Glasmaterial im Bereich der Durchführungsöffnung aufgebracht werden kann, so dass eine hermetische Dichtheit, wie zuvor beschrieben, vorliegt. Des Weiteren wird hierdurch eine ausreichende Festigkeit im Bereich der Durchführung zur Verfügung gestellt.

Die Bauteildurchgangsdicke im Bereich der Verstärkung entspricht, um eine hermetisch dichte Durchführung sicherzustellen, im Wesentlichen der Einglasungslänge (EL). Dadurch kann eine höhere mechanische Festigkeit der eingeglasten Anoden oder Kathoden erzielt werden.

In einer ersten Ausgestaltung der Erfindung kann vorgesehen sein, dass das Bauteil einen sehr dünnen Grundkörper, der beispielsweise den Gehäusedeckel ausbildet, mit einer Bauteildicke (BD) darstellt und ein separates Verstärkungsbauteil mit einer Verstärkungsbauteildicke (VD) im Bereich der Eingangsöffnung angeordnet wird, so dass sich die Dicken des Bauteils, nämlich die Bauteildicke (BD) und die Verstärkungsbauteildicke (VD) zur Bauteildurchgangsöffnung (BDD) addieren.

Alternativ zu einem separaten Bauteil, das im Bereich der Bauteildurchgangsöffnung, beispielsweise als Ring unterhalb des Grundkörpers, im Bereich der Durchgangsöffnung angeordnet werden kann, kann vorgesehen sein, dass der Grundkörper mit der Bauteildicke (BD) und das Verstärkungsbauteil in einem einzigen Bauteil zusammengefasst sind, wobei im Bereich der Bauteildurchführungsöffnung die Bauteildurchgangsöffnungsdicke (BDD) zur Verfügung gestellt wird. Dies kann beispielsweise dadurch erfolgen, dass der sehr dünne Grundkörper im Bereich der Durchgangsöffnung tiefgezogen wird. Um die notwendigen größeren Abmessungen im Bereich der Verstärkung auszubilden, wird der Grundkörper anschließend an das Tiefziehen gestaucht.

In einer weiteren Alternative der Erfindung ist wiederum der Grundkörper mit der Bauteildicke (BD) und das Verstärkungsbauteil ein einziges Bauteil, wobei im Bereich der Bauteildurchführungsöffnung die Bauteildurchführungsdicke (BDD) zur Verfügung gestellt wird. Dies erfolgt in der weiteren Alternative dadurch, dass der sehr dünne Grundkörper im Bereich der Durchgangsöffnung gebogen, insbesondere aus einem Blechteil gezogen und anschließend gefaltet wird.

Die Breite der Verstärkung ist dann größer als die Dicke des Grundkörpers.

Dadurch, dass die Breite der Verstärkung in ihren materiellen Außenabmessungen, wie zuvor beschrieben, größer als 1,2 x die Außenabmessungen des Glasmaterials ist, kann die für eine hermetische Dichtung notwendige Kompression auf das Glas aufgebracht werden, wodurch eine hermetisch dichte Durchführung zur Verfügung gestellt wird.
Um eine ausreichende hermetische Dichtheit zu erzielen, ist es des Weiteren besonders vorteilhaft, wenn die Einglasungslänge größer als 1,5 mm ist, insbesondere im Bereich 1,5 mm bis 8 mm liegt.
Besonders bevorzugt sind dünne Bauteile, die über eine ausreichende Stabilität verfügen und bei Umformung mit anschließendem Zurückstauchen auch noch eine ausreichende Verstärkung darstellen, die mindestens im Bereich der Einglasungslänge, bevorzugt mindestens der Einglasungslänge plus 2 mm, insbesondere bevorzugt 3,5 mm bis 10 mm, liegt.

Besonders bevorzugt ist es, wenn als Material, das für das Bauteil, insbesondere den Grundkörper wie auch das Verstärkungsbauteil, verwandt wird, ein Leichtmetall mit einem spezifischen Gewicht < 5 kg/dm³ und/oder einem Schmelzpunkt im Bereich 350° C bis 800° C und/oder einer elektrischen Leitfähigkeit im Bereich 5 · 10⁶ S/m bis 50 · 10⁶ S/m und/oder einem Ausdehnungskoeffizienten α (20° C bis 300° C) im Bereich 18 · 10⁻⁶/K bis 30 · 10⁻⁶/K umfasst.
Besonders bevorzugt ist es, wenn als Materialien für das Leichtmetall Aluminium, eine Aluminiumlegierung, Magnesium, eine Magnesiumlegierung oder auch andere Metalle und Legierungen wie Edelstahl sind. Besonders bevorzugt handelt es sich bei dem erfindungsgemäßen Bauteil um ein Deckelbauteil eines Gehäuses, insbesondere eines Gehäuses für eine elektrische Speichereinrichtung, wobei die Speichereinrichtung, beispielsweise eine Batterie oder ein Kondensator sein kann.

Neben dem Gehäuse stellt die Erfindung auch eine Speichereinrichtung, insbesondere eine Batterie oder einen Kondensator, mit einem derartigen Bauteil, zumindest als Deckelbauteil, durch das die Durchführung hindurchgeführt wird, zur Verfügung.

Die Erfindung soll nachfolgend anhand der Zeichnungen näher beschrieben werden.

Es zeigen:
- Fig. 1: eine erste Ausführungsform der Erfindung mit separatem Verstärkungsbauteil;
- Fig. 2: eine zweite Ausgestaltung der Erfindung mit einem einteiligen Bauteil mit Verstärkungsabschnitten.
- Fig. 3: eine dritte Ausgestaltung der Erfindung mit einem einteiligen Bauteil mit Verstärkungsabschnitten.

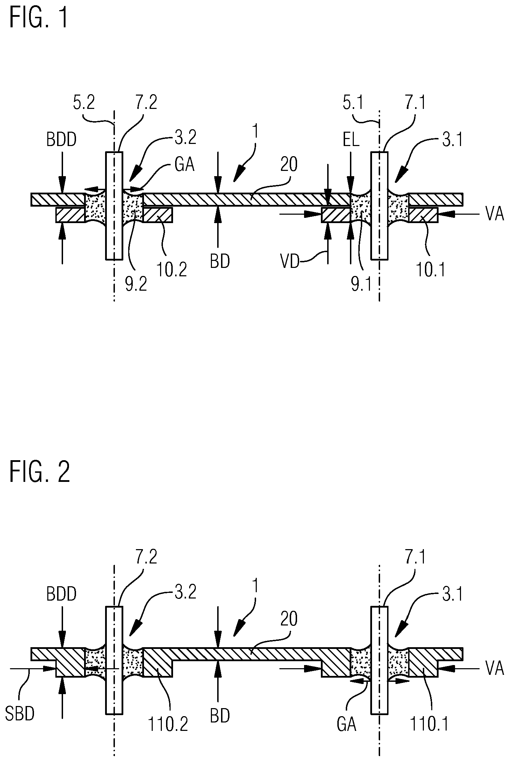

Fig. 1 zeigt ein erfindungsgemäßes Bauteil 1 mit zwei Durchführungsöffnungen 3.1, 3.2. Die Durchführungsöffnungen haben bevorzugt eine um die Achse 5.1 bzw. 5.2 zylindrische Form, beispielsweise eine runde Form oder aber auch eine ovale Form.

Durch die Durchführungsöffnungen 3.1, 3.2 werden Leiter 7.1, 7.2, hier in Form von Stiften, in einem Glasmaterial 9.1, 9.2 hindurchgeführt.

Die Dicke des Bauteils beträgt BD, die Bauteildurchgangsöffnungsdicke BDD und die Dicke der separaten Verstärkungsbauteile 10.1, 10.2 VD.

Wie aus Fig. 1 hervorgeht, gilt dass, die Bauteildurchgangsöffnungsdicke BDD gleich DD plus VD ist.

Die Glasmaterialaußenabmessung des Glasmaterials 9.1, 9.2 beträgt GA, bei einem bevorzugt kreisrunden bzw. ovalen Glasmaterial entspricht dies dem Durchmesser des Glaspfropfens.

Die Verstärkungsmaterial-Außenabmessungen VA des separaten Verstärkungsbauteils, das bevorzugt ebenfalls kreisförmig bzw. ringförmig ausgeführt ist, beträgt das 1,2-fache der Glasmaterial-Außenabmessungen GA, d.h. bei kreisförmigem bzw. rundem Glasmaterialpfropfen und kreisförmig bzw. rundem Verstärkungsmaterial ist der Durchmesser des Verstärkungsmaterials das mindestens 1,2-fache des Durchmessers des Glasmaterials.

Ebenfalls zu erkennen ist die Länge EL der Einglasung in die Bauteildurchgangsöffnung. Bei dem dargestellten Bauteil entspricht die Länge der Einglasung (EL) der Länge der Bauteildurchgangsöffnung bzw. der Bauteildurchgangsdicke (BDD).

Selbstverständlich wäre es auch möglich, dass die Einglasungslänge EL kürzer ist als die Bauteildicke BDD, umgekehrt ist dies aber nicht möglich.

Als Material für den Grundkörper 20, der vorliegend ein Gehäuseteil, bevorzugt ein Deckelteil, beispielsweise einer Speichereinrichtung wie einer Batterie darstellt, ist ein Leichtmetall mit einem spezifischen Gewicht von 5 kg/dm³ und/oder einem Schmelzpunkt im Bereich 350° C bis 800° C und/oder einer elektrischen Leitfähigkeit im Bereich 5 · 10⁶ S/m bis 50 · 10⁶ S/m und/oder einem Ausdehnungskoeffizienten α (20° C bis 300° C) im Bereich 18 · 10⁻⁶/K bis 30 · 10⁻⁶/K. Bei den Leichtmetallen handelt es sich bevorzugt um Aluminium, Aluminiumlegierungen, Magnesium, Magnesiumlegierungen. Das Material der Leiterstifte 7.1, 7.2 ist bevorzugt ein Metall, insbesondere Kupfer, Cusic, eine Kupferlegierung, ASC, Silber, eine Silberlegierung, Gold oder eine Goldlegierung oder aber auch Aluminium oder eine Aluminiumlegierung.

Als Glasmaterial für die Einglasung 9.2 wird bevorzugt ein Phosphatglas, wie beispielsweise in der WO 2012/110247 beschrieben, deren Offenbarungsgehalt in die vorliegende Anmeldung vollumfänglich mitaufgenommen wird, eingesetzt In Fig. 2 ist eine alternative Ausgestaltung der Erfindung gezeigt.

Wiederum wurde das Bauteil mit 1 bezeichnet, es ist aber im Gegensatz zu Fig. 1 nunmehr nicht zweiteilig im Bereich der Bauteildurchgangsöffnungen 3.1, 3.2 ausgebildet, sondern einteilig, d.h. der Grundkörper 20 umfasst im Bereich der Bauteildurchgangsöffnungen 3.1, 3.2 Verdickungen 110.1, 110.2, die dadurch erhalten werden, dass das Bauteil 1 im Bereich der Verstärkung 110.1, 110.2 tiefgezogen wird, wodurch das Bauteil im Bereich der Bauteildurchgangsöffnung die Dicke BDD erhält. Die Dicke BDD ist stets größer als die Dicke BD des Bauteils. Durch an das Umformen in Form von Tiefziehen und anschließendes Zurückstauchen wird die in Fig. 2 dargestellte Form der Verstärkung erreicht, bei der Außendurchmesser VA im Bereich des Verstärkungselements 1,2 x größer ist als der Außendurchmesser der Einglasung GA. Gleiche Bauteile wie in Fig. 1 werden mit denselben Bezugsziffern belegt.

Auch die Dicke des zurückgestauchten verstärkten Bereichs ist mit einer Dicke BDD größer als die Dicke des Grundmaterials BD. Die Breite des zurückgestauchten verstärkten Bereichs ist mit SBD bezeichnet.

Die Bearbeitung im Bereich der Verstärkung kann sichtbar gemacht werden, da die Struktur-Fließlinien im Gegensatz zu einem mittels spanenden Verfahren bearbeiteten Bauteil im Bereich der Stauchung durch den Umformprozess gebeugt werden.

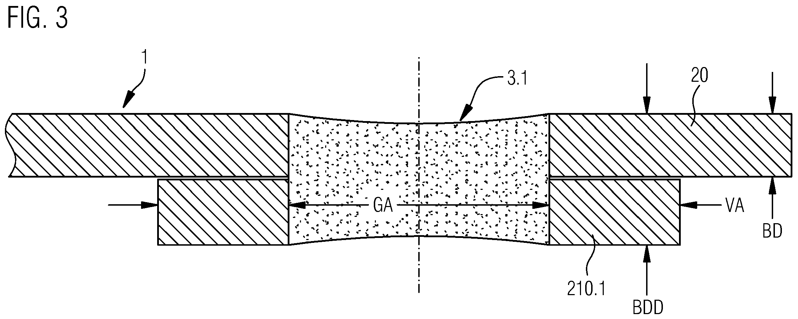

In Fig. 3 ist eine weitere alternative Ausgestaltung der Erfindung gezeigt.

Wiederum wurde das Bauteil mit 1 bezeichnet, es ist aber im Gegensatz zu Fig. 1 nunmehr nicht zweiteilig im Bereich der Bauteildurchgangsöffnungen 3.1, 3.2 ausgebildet, sondern einteilig, d.h. der Grundkörper 20 umfasst im Bereich der Bauteildurchgangsöffnungen 3.1, 3.2 Verdickungen 210.1, 210.2, die dadurch erhalten werden, dass das Bauteil 1 im Bereich der Verstärkung 210.1, 210.2 tiefgezogen und anschließend gefaltet wird, wodurch das Bauteil im Bereich der Bauteildurchgangsöffnung die Dicke BDD erhält. Die Dicke BDD ist durch die Faltung etwa zwei Mal die Dicke BD des Bauteils in der dargestellten Ausführungsform. Durch an das Umformen in Form von Tiefziehen und anschließende Faltung wird die in Fig. 3 dargestellte Form der Verstärkung erreicht, wobei der Außendurchmesser VA im Bereich des Verstärkungselements 1,2 x größer ist als der Außendurchmesser der Einglasung GA. Gleiche Bauteile wie in Fig. 1 werden mit denselben Bezugsziffern belegt.

Die Stärke des verstärkten Bereichs ist mit einer Stärke von ungefähr 2 x BD größer als die Dicke des Grundmaterials BD. Es wäre anstelle der einfachen Faltung auch eine mehrfache Faltung, z. B. eine 3-fach und 4-fache Faltung, möglich, um die Dicke im Bereich der Verstärkung einzustellen, ohne dass von der Erfindung abgewichen wird.

Die Bearbeitung im Bereich der Verstärkung kann sichtbar gemacht werden, da die Struktur-Fließlinien im Gegensatz zu einem mittels spanenden Verfahren bearbeiteten Bauteil im Bereich der Stauchung bzw. Faltung durch den Umformprozess gebeugt werden.

Ansonsten sind gleiche Bauteile wie in Fig. 1 in Fig. 3 mit denselben Bezugsziffern bezeichnet. Bevorzugt ist das Material des Bauteils, also der Grundkörper einschließlich des Verstärkungsbereichs, ein Leichtmetall, wie bereits für den Grundkörper zu Fig. 1 beschrieben.

Die zweite und dritte Alternative, die zuvor beschrieben wurde, hat den Vorteil, dass das Anbringen eines zusätzlichen Bauteils, nämlich des Verstärkungsrings, eingespart werden kann.

Besonders bevorzugt sind Glasmaterialien, die nachfolgende Komponenten in mol-% umfassen:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 0-10 mol-%, insbesondere 1-5 mol-%, ganz bevorzugt 2-5 mol-% |

Bevorzugt ist das Glasmaterial derart zusammengesetzt, dass es einen Ausdehnungskoeffizienten α im Bereich 20° C bis 300° C ≥ 13 · 10⁻⁶/K, bevorzugt im Bereich 13 · 10⁻⁶/K bis 25 · 10⁻⁶/K aufweist.

Mit der Erfindung wird erstmals ein dünnes Gehäusebauteil, insbesondere für ein Gehäuse einer Speichereinrichtung, zur Verfügung gestellt, das sich durch eine sehr geringe Materialdicke BDD auszeichnet und damit ein geringes Gewicht und großes Zellvolumen sowie einer hermetisch dichten Einglasung mit einer Einglasungslänge EL im Bereich der Durchführungsöffnung für die Leiter.

Insbesondere ist es mit der Erfindung möglich auch bei einem einteiligen Bauteil durch einen Umformprozess eine ausreichende Kompression für eine hermetisch dichte Durchführung zur Verfügung zu stellen.

Mit der Erfindung wird zum einen die notwendige mechanische Festigkeit bei dünnen Materialien, die in Gehäusen z. B. als Deckel eingesetzt werden, erhöht, zum anderen die notwendigen Drücke bzw. Radialkräfte für die hermetisch dichte Einglasung zur Verfügung gestellt.

### Die Erfindung umfasst Aspekte, die in den nachfolgenden Sätzen offenbart sind, die Teil der Beschreibung sind, aber keine Ansprüche in Übereinstimmung mit J15/88

### Sätze

1. Bauteil (1) mit einer Bauteildicke (BD) und wenigstens einer Durchführungsöffnung (3.1, 3.2), bevorzugt Gehäusebauteil, insbesondere eines Batteriegehäuses oder Kondensatorgehäuses, wobei durch die Durchführungsöffnung (3.1, 3.2) ein Leiter (7.1, 7.2), insbesondere ein im Wesentlichen stiftförmiger Leiter in einem Glas- oder Glaskeramikmaterial mit einer Glasmaterialaußenabmessung (GA) und einer Einglasungslänge (EL) hindurchgeführt wird, wobei das Bauteil im Bereich der Durchführungsöffnung (3.1, 3.2) eine Verstärkung (10.1, 10.2) mit einer Bauteildurchgangsöffnungsdicke (BDD) aufweist, wobei die Bauteildurchgangsöffnungsdicke (BDD) größer als die Bauteildicke (BD) ist und die Verstärkung (10.1, 10.2) eine Verstärkungsmaterialaußenabmessung (VA) aufweist, dadurch gekennzeichnet, dass das Verhältnis der Glasmaterialaußenabmessung (GA) zur Verstärkungsmaterialaußenabmessung (VA) ≥ 1 zu 1,2 ist, insbesondere im Bereich 1 zu 1,2 bis 1 zu 2,2 liegt.
2. Bauteil nach Satz 1,
   dadurch gekennzeichnet, dass
   die Bauteildurchgangsdicke (BDD) der Verstärkung wenigstens der Einglasungslänge (EL) entspricht.
3. Bauteil nach einem der Sätze 1 bis 2,
   dadurch gekennzeichnet, dass
   das Bauteil (1) einen Grundkörper (5) mit der Bauteildicke (BD) und ein separates Verstärkungsbauteil (10.1, 10.2) mit einer Verstärkungsbauteildicke (VD) aufweist und sich Verstärkungsbauteildicke (VD) zur Bauteildurchgangsöffnungsdicke (BDD) addieren.
4. Bauteil nach einem der Sätze 1 bis 2,
   dadurch gekennzeichnet, dass
   das Bauteil einen Grundkörper (5) mit der Bauteildicke (BD) und das Verstärkungsbauteil (10.1, 10.2) in einem einzigen Bauteil umfasst, wobei im Bereich der Bauteildurchgangsöffnung (3.1, 3.2) die Bauteildurchgangsöffnungsdicke (BDD) zur Verfügung gestellt wird.
5. Bauteil nach einem der Sätze 1 bis 4,
   dadurch gekennzeichnet, dass
   die Einglasungslänge (EL) größer als 1,5 mm ist, insbesondere im Bereich 1,5 mm bis 8 mm liegt.
6. Bauteil nach einem der Sätze 1 bis 5,
   dadurch gekennzeichnet, dass
   die Bauteildicke (BD) mindestens im Bereich der Einglasungslänge, bevorzugt mindestens die Einglasungslänge plus 2 mm, insbesondere bevorzugt 3,5 mm bis 10 mm beträgt.
7. Bauteil nach einem der Sätze 1 bis 6,
   dadurch gekennzeichnet, dass
   das Bauteil (1) wenigstens teilweise ein Leichtmetall mit einem spezifischen Gewicht < 5 kgdm³ und/oder einem Schmelzpunkt im Bereich 350° C bis 800° C und/oder einer elektrischen Leitfähigkeit im Bereich 5 · 10⁻⁶ S/m bis 50 · 10⁻⁶ S/m und/oder einem Ausdehnungskoeffizient α (20° C - 300° C) im Bereich 18 · 10⁻⁶/K bis 30 · 10⁻⁶/K umfasst.
8. Bauteil nach Satz 7,
   dadurch gekennzeichnet, dass
   das Leichtmetall, Aluminium, eine Aluminiumlegierung, Magnesium, eine Magnesiumlegierung, Titan oder eine Titanlegierung ist.
9. Gehäuse, insbesondere für eine elektrische Speichereinrichtung, insbesondere eine Batterie oder einen Kondensator mit einem Bauteil nach einem der Sätze 1 bis 7.
10. Speichereinrichtung, insbesondere Batterie oder Kondensator, mit einem Gehäuse nach Satz 9.

## Patentansprüche

1. Bauteil (1) mit einer Bauteildicke (BD) und wenigstens einer Durchführungsöffnung (3.1, 3.2), bevorzugt Gehäusebauteil, insbesondere eines Batteriegehäuses oder Kondensatorgehäuses, wobei durch die Durchführungsöffnung (3.1, 3.2) ein Leiter (7.1, 7.2), insbesondere ein im Wesentlichen stiftförmiger Leiter in einem Glas- oder Glaskeramikmaterial mit einer Glasmaterialaußenabmessung (GA) und einer Einglasungslänge (EL) hindurchgeführt wird, wobei das Bauteil im Bereich der Durchführungsöffnung (3.1, 3.2) eine Verstärkung (10.1, 10.2) mit einer Bauteildurchgangsöffnungsdicke (BDD) aufweist, wobei die Bauteildurchgangsöffnungsdicke (BDD) größer als die Bauteildicke (BD) ist und die Verstärkung (10.1, 10.2) eine Verstärkungsmaterialaußenabmessung (VA) aufweist,
**dadurch gekennzeichnet, dass**
die Verstärkungsmaterialaußenabmessung (VA) mindestens das 1,2-fache der Glasmaterialaußenabmessungen (GA) beträgt, wobei das Verstärkungsmaterial eine Breite aufweist und das Glas- oder Glaskeramikmaterial ein kreisförmiger oder runder Pfropfen mit einem Durchmesser ist und die Breite des Verstärkungsmaterials das mindestens 1,2-fache des Durchmessers des Glas- oder Glaskeramikmaterials ist.

2. Bauteil nach Anspruch 1,
**dadurch gekennzeichnet, dass**
das Verstärkungsmaterial kreisförmig oder rund ist, wobei die Breite ein Durchmesser des Verstärkungsmaterials ist.

3. Bauteil nach einem der Ansprüche 1 bis 2,
**dadurch gekennzeichnet, dass**
der Durchmesser des Verstärkungsmaterials höchstens das 2,2-fache des Durchmessers des Glas- oder Glaskeramikmaterials ist.

4. Bauteil nach einem der Ansprüche 1 bis 3,
**dadurch gekennzeichnet, dass**
die Bauteildurchgangsdicke (BDD) der Verstärkung wenigstens der Einglasungslänge (EL) entspricht.

5. Bauteil nach einem der Ansprüche 1 bis 4,
**dadurch gekennzeichnet, dass**
das Bauteil (1) einen Grundkörper (5) mit der Bauteildicke (BD) und ein separates Verstärkungsbauteil (10.1, 10.2) mit einer Verstärkungsbauteildicke (VD) aufweist und sich Verstärkungsbauteildicke (VD) und Bauteildicke (BD) zur Bauteildurchgangsöffnungsdicke (BDD) addieren.

6. Bauteil nach einem der Ansprüche 1 bis 5,
**dadurch gekennzeichnet, dass**
das Bauteil einen Grundkörper (5) mit der Bauteildicke (BD) und das Verstärkungsbauteil (10.1, 10.2) in einem einzigen Bauteil umfasst, wobei im Bereich der Bauteildurchgangsöffnung (3.1, 3.2) die Bauteildurchgangsöffnungsdicke (BDD) zur Verfügung gestellt wird.

7. Bauteil nach einem der Ansprüche 1 bis 6,
**dadurch gekennzeichnet, dass**
die Einglasungslänge (EL) größer als 1,5 mm ist, insbesondere im Bereich 1,5 mm bis 8 mm liegt.

8. Bauteil nach einem der Ansprüche 1 bis 7,
**dadurch gekennzeichnet, dass**
die Bauteildurchgangsdicke (BDD) mindestens im Bereich der Einglasungslänge liegt, wobei bevorzugt mindestens die Einglasungslänge plus 2 mm, insbesondere bevorzugt 3,5 mm bis 10 mm beträgt.

9. Bauteil nach einem der Ansprüche 1 bis 8
**dadurch gekennzeichnet, dass**
das Bauteil (1) wenigstens teilweise ein Leichtmetall mit einem spezifischen Gewicht < 5 kg/dm³ und/oder einem Schmelzpunkt im Bereich 350° C bis 800° C und/oder einer elektrischen Leitfähigkeit im Bereich 5 · 10⁻⁶ S/m bis 50 · 10⁻⁶ S/m und/oder einem Ausdehnungskoeffizient α (20° C - 300° C) im Bereich 18 · 10⁻⁶/K bis 30 · 10⁻⁶/K umfasst.

10. Bauteil nach Anspruch 9,
**dadurch gekennzeichnet, dass**
das Leichtmetall, Aluminium, eine Aluminiumlegierung, Magnesium, eine Magnesiumlegierung, Titan oder eine Titanlegierung ist.

11. Gehäuse, insbesondere für eine elektrische Speichereinrichtung, insbesondere eine Batterie oder einen Kondensator mit einem Bauteil nach einem der Ansprüche 1 bis 10.

12. Speichereinrichtung, insbesondere Batterie oder Kondensator, mit einem Gehäuse nach Anspruch 11.

## Claims

1. A component (1) having a component thickness (BD) and at least one feedthrough opening (3.1, 3.2), preferably a housing component, in particular a battery housing or capacitor housing, wherein a conductor (7.1, 7.2), in particular a substantially pin-shaped conductor in a glass or glass-ceramic material having a glass material external dimension (GA) and a glazing length (EL) is fed through the feedthrough opening (3.1, 3.2), wherein the component has a reinforcement (10.1, 10.2) having a component passage opening thickness (BDD) in the region of the feedthrough opening (3.1, 3.2), wherein the component passage opening thickness (BDD) is greater than the component thickness (BD), and the reinforcement (10.1, 10.2) has a reinforcement material external dimension (VA),
**characterized in that** the reinforcement material external dimension (VA) is at least 1.2 times the class material external dimensions (GA), wherein the reinforcement material has a width and the glass or glass-ceramic material is a circular or round plug having a diameter and the width of the reinforcement material is at least 1.2 times the diameter of the glass or glass-ceramic material.

2. The component according to Claim 1,
**characterized in that** the reinforcement material is circular or round, wherein the width is a diameter of the reinforcement material.

3. The component according to any one of Claims 1 to 2,
**characterized in that** the diameter of the reinforcement material is at most 2.2 times the diameter of the glass or glass-ceramic material.

4. The component according to any one of Claims 1 to 3,
**characterized in that** the component passage thickness (BDD) of the reinforcement corresponds to at least the glazing length (EL).

5. The component according to any one of Claims 1 to 4, **characterized in that** the component (1) has a main body (5) having the component thickness (BD) and a separate reinforcement component (10.1, 10.2) having a reinforcement component thickness (VD) and reinforcement component thickness (VD) and component thickness (BD) add up to form the component passage opening thickness (BDD).

6. The component according to any one of Claims 1 to 5, **characterized in that** the component comprises a main body (5) having the component thickness (BD) and the reinforcement component (10.1, 10.2) in a single component, wherein the component passage opening thickness (BDD) is provided in the region of the component passage opening (3.1, 3.2).

7. The component according to any one of Claims 1 to 6, **characterized in that** the glazing length (EL) is greater than 1.5 mm, in particular is in the range of 1.5 mm to 8 mm.

8. The component according to any one of Claims 1 to 7, **characterized in that** the component passage thickness (BDD) is at least in the range of the glazing length, wherein preferably it is at least the glazing length plus 2 mm, particularly preferably 3.5 mm to 10 mm.

9. The component according to any one of Claims 1 to 8, **characterized in that** the component (1) at least partially comprises a light metal having a specific weight < 5 kg/dm³ and/or a melting point in the range of 350°C to 800°C and/or an electrical conductivity in the range from 5 · 10⁻⁶ S/m to 50 · 10⁻⁶S/m and/or a coefficient of thermal expansion α (20°C - 300°C) in the range from 18 · 10⁻⁶/K to 30 · 10⁻⁶/K.

10. The component according to Claim 9,
**characterized in that** the light metal is aluminum, an aluminum alloy, magnesium, a magnesium alloy, titanium, or a titanium alloy.

11. A housing, in particular for an electrical storage device, in particular a battery or a capacitor having a component according to any one of Claims 1 to 10.

12. A storage device, in particular a battery or capacitor, having a housing according to Claim 11.

## Revendications

1. Composant (1) ayant une épaisseur de composant (BD) et au moins une ouverture de passage (3.1, 3.2), de préférence composant de boîtier, en particulier d'un boîtier de batterie ou d'un boîtier de condensateur, dans lequel un conducteur (7.1, 7.2), en particulier un conducteur sensiblement en forme de tige dans un matériau vitreux ou vitrocéramique ayant une dimension extérieure de matériau vitreux (GA) et une longueur de vitrification (EL), est introduit à travers l'ouverture de passage (3.1, 3.2), dans lequel le composant présente dans la zone de l'ouverture de passage (3.1, 3.2) un renforcement (10.1, 10.2) ayant une épaisseur d'ouverture de passage de composant (BDD), l'épaisseur d'ouverture de passage de composant (BDD) étant supérieure à l'épaisseur de composant (BD) et le renforcement (10.1, 10.2) présentant une dimension extérieure de matériau de renforcement (VA),
**caractérisé en ce que**
la dimension extérieure de matériau de renforcement (VA) est au moins 1,2 fois les dimensions extérieures de matériau vitreux (GA), le matériau de renforcement présentant une largeur et le matériau vitreux ou vitrocéramique étant un bouchon circulaire ou rond ayant un diamètre et la largeur du matériau de renforcement étant au moins 1,2 fois le diamètre du matériau vitreux ou vitrocéramique.

2. Composant selon la revendication 1,
**caractérisé en ce que**
le matériau de renforcement est circulaire ou rond, la largeur étant un diamètre du matériau de renforcement.

3. Composant selon l'une des revendications 1 à 2,
**caractérisé en ce que**
le diamètre du matériau de renforcement est au maximum 2,2 fois le diamètre du matériau vitreux ou vitrocéramique.

4. Composant selon l'une des revendications 1 à 3,
**caractérisé en ce que**
l'épaisseur de passage de composant (BDD) du renforcement correspond au moins à la longueur de vitrification (EL).

5. Composant selon l'une des revendications 1 à 4,
**caractérisé en ce que**
le composant (1) présente un corps de base (5) ayant l'épaisseur de composant (BD) et un composant de renforcement séparé (10.1, 10.2) ayant une épaisseur de composant de renforcement (VD) et l'épaisseur de composant de renforcement (VD) et l'épaisseur de composant (BD) s'ajoutent pour former l'épaisseur d'ouverture de passage de composant (BDD).

6. Composant selon l'une des revendications 1 à 5,
**caractérisé en ce que**
le composant comprend un corps de base (5) ayant l'épaisseur de composant (BD) et le composant de renforcement (10.1, 10.2) dans un seul composant, l'épaisseur d'ouverture de passage de composant (BDD) étant fournie dans la zone de l'ouverture de passage de composant (3.1, 3.2).

7. Composant selon l'une des revendications 1 à 6,
**caractérisé en ce que**
la longueur de vitrification (EL) est supérieure à 1,5 mm, en particulier se situe dans la plage de 1,5 mm à 8 mm.

8. Composant selon l'une des revendications 1 à 7,
**caractérisé en ce que**
l'épaisseur de passage de composant (BDD) se situe au moins dans la plage de la longueur de vitrification, de préférence est égale à au moins la longueur de vitrification plus 2 mm, en particulier est de préférence comprise entre 3,5 mm et 10 mm.

9. Composant selon l'une des revendications 1 à 8,
**caractérisé en ce que**
le composant (1) comprend au moins partiellement un métal léger ayant un poids spécifique < 5 kg/dm³ et/ou un point de fusion dans la plage de 350 °C à 800 °C et/ou une conductivité électrique dans la plage de 5 · 10⁻⁶ S/m à 50 · 10⁻⁶ S/m et/ou un coefficient de dilatation α (20 °C - 300 °C) dans la plage de 18 · 10⁻⁶/K à 30 · 10⁻⁶/K.

10. Composant selon la revendication 9,
**caractérisé en ce que**
le métal léger est de l'aluminium, un alliage d'aluminium, du magnésium, un alliage de magnésium, du titane ou un alliage de titane.

11. Boîtier, en particulier pour un dispositif de stockage électrique, en particulier une batterie ou un condensateur, comportant un composant selon l'une des revendications 1 à 10.

12. Dispositif de stockage, en particulier batterie ou condensateur, comportant un boîtier selon la revendication 11.
